Europäisches Patentamt

European Patent Office

Office européen des brevets

(19)

(11) Veröffentlichungsnummer: **0 276 421 B1**

(12) **EUROPÄISCHE PATENTSCHRIFT**

(45) Veröffentlichungstag der Patentschrift: 09.10.91

(51) Int. Cl.5: **H04Q 3/00**, H04Q 11/04

(21) Anmeldenummer: **87118087.3**

(22) Anmeldetag: **07.12.87**

(54) Schaltungsanordnung für Fernmeldevermittlungsanlagen, insbesondere Fernsprechvermittlungsanlagen, mit einem Netz von Vermittlungsstellen und von diese verbindende Bündel von verbindungsindividuell belegbaren Kanälen.

(30) Priorität: **23.12.86 DE 3644227**

(43) Veröffentlichungstag der Anmeldung:
**03.08.88 Patentblatt 88/31**

(45) Bekanntmachung des Hinweises auf die
Patenterteilung:
**09.10.91 Patentblatt 91/41**

(84) Benannte Vertragsstaaten:
**AT BE CH DE ES FR GB GR IT LI NL SE**

(56) Entgegenhaltungen:
**EP-A- 0 211 245**
**DE-B- 2 736 670**
**FR-A- 1 513 888**
**US-A- 3 155 775**
**US-A- 3 597 544**

(73) Patentinhaber: **SIEMENS AKTIENGESELL-SCHAFT**
**Wittelsbacherplatz 2**
**W-8000 München 2(DE)**

(72) Erfinder: **Gneiting, Dieter, Dipl.-Math.**
**Gräfelfingerstrasse 70**
**W-8000 München 70(DE)**

Rank Xerox (UK) Business Services

**Beschreibung**

Schaltungsanordnung für Fernmeldevermittlungsanlagen, insbesondere Fernsprechvermittlungsanlagen, mit einem Netz von Vermittlungsstellen und von diese verbindenden Bündeln von verbindungsindividuell belegbaren Kanälen

In Fernmeldevermittlungsanlagen, zum Beispiel Fernsprechvermittlungsanlagen, besteht ganz allgemein neben dem Erfordernis einer Übertragung von verbindungsindividuellen Nachrichten über eine jeweils zwischen zwei Teilnehmerstellen durchgeschaltete Verbindung die Aufgabe, zusätzlich verbindungsindividuelle Signalisierungsinformationen zu übertragen. Verbindungsindividuelle Nachrichten sind in diesem Zusammenhang zum Beispiel bei Fernsprechanlagen in Form von Sprechwechselströmen oder bei Fernschreibanlagen in Form von Fernschreibzeichen dargestellt und übertragbar. Signalisierungsinformationen sind zusätzliche begleitende Schaltkennzeichen für den Aufbau, die Aufrechterhaltung, die Bezahlung und die Auslösung jeweils einer Verbindung, zum Beispiel Belegungskennzeichen, Wahlkennzeichen, Wahlendekennzeichen, Meldekennzeichen, Gebührenzählimpulse, Endekennzeichen, Auslösekennzeichen und dergleichen.

Durch das Sonderheft vom Februar 1985 der Zeitschrift "telcom report" ist die zum Bereich der Nachrichtentechnik gehörende ISDN-Technik sehr ausführlich beschrieben. Dabei handelt es sich um eine moderne Fernmeldevermittlungstechnik, die neben Fernsprechen und Telex (eine bestimmte Art von Fernschreiben) auch eine größere Anzahl von weiteren Kommunikationsmöglichkeiten wie Schnellfax, Bildfernsprechen, Teletex, Datenübertragung, Fernwirken und viele andere mehr gewährt und zusätzlich ergänzende Facilities wie zum Beispiel Anzeige der Rufnummer des rufenden Teilnehmers beim gerufenen Teilnehmer, Gebührenübernahme durch den letzteren, automatischen Rückruf nach Besetztsein und Freiwerden des letzteren und viele andere mehr ermöglicht.

In konventionellen Vermittlungsanlagen und Fernmeldenetzen erfolgt die verbindungsindividuelle Nachrichtenübertragung über Leitungen bzw. Kanäle von entsprechenden Übertragungssystemen, wobei diese Leitungen und Kanäle eine für die vorgesehene Nachrichtenübertragung jeweils geeignete Bandbreite aufweisen. Fernschreibkanäle zum Beispiel brauchen nur eine geringere Bandbreite zu haben als Fernsprechkanäle. Bildfernsprechverbindungen über moderne Vermittlungsanlagen dagegen erfordern eine noch größere Bandbreite als reine Fernsprechverbindungen.- Ferner bestehen für die Übertragung verbindungsindividueller Signalisierungsinformationen grundsätzlich zwei Möglichkeiten, nämlich die Übertragung über den jeweils durchgeschalteten Verbindungsweg auf zusätzlich zu dessen Nachrichtenweg mit demselben durchgeschalteten Adern, bzw. mittels von den übertragenen Nachrichteninformationen unverwechselbar unterscheidbarer Schaltkennzeichen einerseits, oder die Übertragung über einen für die Leitungen bzw. Kanäle eines ganzen Bündels, oder auch mehrerer Bündel, jeweils gemeinsamen Signalisierungskanal andererseits.

In welcher Weise auch immer die Signalisierungsinformationen übertragen werden, so sind sie doch in der Regel verbindungsindividuell zugeordnet. (Darüber hinaus besteht natürlich ganz allgemein die Möglichkeit, Signalisierungsinformationen vorzusehen und zu übertragen, die nicht verbindungsindividuell zugeordnet sind.) Fernmeldevermittlungssysteme verschiedener Bauart unterscheiden sich nun unter anderem hinsichtlich der jeweils durch sie gegebenen Möglichkeiten der Signalisierung, insbesondere hinsichtlich des Umfanges des Gesamt-Spektrums der verbindungsindividuell übertragbaren verschiedenen Signalisierungszeichen, seien diese räumlich parallel zum durchgeschalteten Verbindungsweg übertragbar oder seien sie über den einem oder mehreren Bündeln gemeinsamen Signalisierungskanal zu übertragen. Ebenso können sich Fernmeldevermittlungssysteme verschiedener Bauart - wie bereits zuvor erwähnt - auch durch die Bandbreite der verfügbaren Leitungen bzw. Kanäle voneinander unterscheiden, wie zum Beispiel bei Fernschreibkanälen einerseits und Fernsprechkanälen andererseits; darüber hinaus aber sieht die ISDN-Technik auch Breitbandverbindungen vor. Hierfür können besondere Breitbandkanäle und auch Breitband-Koppelfelder vorgesehen werden; Breitbandverbindungen können aber auch als Mehrkanalverbindungen aus entsprechend mehreren Kanälen normaler Bandbreite aufgebaut werden.

Bezüglich der Bandbreite von verbindungsindividuell belegbaren Leitungen bzw. Kanälen und von über Koppelfelder herstellbaren Durchschaltewegen kann man diese alle nun unter dem Aspekt des Umfanges der durch sie gegebenen Übertragungsmöglichkeiten, die also die Nachrichtenübertragung selbst und/oder die Übertragung von Signalisierungszeichen betreffen können, in verschiedene Klassen unterscheiden, wobei eine unterste von ihnen lediglich unerweiterte Übertragungsmöglichkeiten aufweisen möge und weitere Klassen demgegenüber mehr oder weniger erweiterte Übertragungsmöglichkeiten aufweisen mögen. Ebenso aber, wie diese unterschiedlichen Übertragungsmöglichkeiten durch unterschiedliche Bandbreiten gegeben sein können, können sie auch durch unterschiedliche Vielfalt von möglichen Signalisierungsinformationen gegeben sein.

Durch die deutsche Auslegeschrift 2 736 670 ist es bekannt, einer vom jeweils rufenden Teilnehmer gewählten Zielortsinformation durch jenen eine von ihm ebenfalls zu wählende Zusatzinformation beifügen zu lassen, die die von ihm geforderten Übertragungsmöglichkeiten für Fernsehen, Bildfernsprechen oder Datenübermittlung angibt. Anhand der jeweils gewählten Zielortsinformation und der Zusatzinformation wird dann unter den hinsichtlich der Übertragungsmöglichkeiten sich unterscheidenden mehreren Verbindungsmöglichkeiten zu dem betreffenden Zielort eine Verbindung ausgewählt. Die jeweilige Zusatzinformation dient in diesem bekannten Falle unter anderem dazu, in umgewandelter Form Leitweglenkungseinrichtungen dahingehend zu beeinflussen, daß gegebenenfalls vorhandene Umwegverbindungen geringerer Übertragungsgüte gegen Belegung gesperrt sind und nur die besonders hochwertigen Übertragungswege zu den entsprechenden Verbindungsdurchschaltungen herabgezogen werden. Schlechthin ist es aber auch möglich und auch gebräuchlich, Leitungsbündel bzw. Kanalbündel (letzteren können die ersteren begrifflich auch subsummiert werden) verschiedener Klassen parallel, das heißt jeweils zwischen einer Vermittlungsstelle und einer anderen Vermittlungsstelle, parallel zu führen. Dadurch können Verbindungen jeweils über solche Kanäle hergestellt werden, die die erforderlichen Übertragungsmöglichkeiten bieten. Dabei ist der Aufwand zur Bereitstellung dieser Kanäle und im Verhältnis dazu der durch die jeweils durchzuschaltende Verbindung erzielbare praktische Nutzen von wesentlicher Bedeutung. Diesem erzielbaren Nutzen kann eine diesbezüglich zwingende Forderung zugrunde liegen oder nicht.

Die Erfindung bezieht sich nun auf eine Schaltungsanordnung für Fernmeldevermittlungsanlagen, insbesondere Fernsprechvermittlungsanlagen, mit einem wenigstens teilweise maschenartigen Netz von Bündeln von verbindungsindividuell belegbaren Kanälen, die in einzelne Netzknoten in diesem Netz bildenden Vermittlungsstellen verbindungsindividuell vermittlungstechnisch zusammenschaltbar sind, und mit Kanalbündeln wenigstens zweier hinsichtlich des Umfangs der durch die Kanäle gegebenen technischen Übertragungsmöglichkeiten, d.h. unerweitert oder - mehr oder weniger - erweitert, sich unterscheidenden Klassen, wobei Kanalbündel auch zweier - oder auch mehrerer - Klassen parallel zwischen je zwei Netzknoten angeordnet sein können, und mit in den Vermittlungsstellen vorgesehenen Einrichtungen zur Leitweglenkung, durch die in einer Vermittlungsstelle unter den jeweils bei einer für eine Verbindungsherstellung gegebenen Wahlinformation zur Verfügung stehenden verschiedenen und hinsichtlich des Verbindungsweg-Verlaufes verschieden günstigen Wegemöglichkeiten, die aufgrund der Maschennetzform bestehen, jeweils eine günstigste Wegemöglichkeit ausgewählt wird, und in denen mit Hilfe einer den jeweils erforderlichen Umfang der technischen Übertragungsmöglichkeiten, die durch die jeweilige Ursprungs- und/oder Zielvermittlungsstelle und/oder durch Kanalbündel von bzw. zu diesen gegeben sind, für eine herzustellende Verbindung angebenden Zusatzinformation eine ein freier Kanal aus einem Kanalbündel, das zum Erreichen des betreffenden angewählten Zielortes in Frage kommt, nicht nur aufgrund der aus der Wahlinformation sich ergebenden Zielinformation sondern auch aufgrund der Zusatzinformation ausgewählt wird, wobei sich aus der Zielortsinformation die jeweils überhaupt in Frage kommenden Kanalbündel ergeben, und wobei die Zusatzinformation bezüglich dieser Kanalbündel, die durch verschiedene Klassenmerkmale bezeichnet sind, angibt, ob und in welchem Ausmaß sie von einer Auswahl ausgeschlossen sind.

Einrichtungen zur Leitweglenkung sind in großer Vielfalt bereits bekannt, zum Beispiel durch die deutschen Patentschriften 1 226 165, 1 912 610 und 1 917 442, sowie durch die darin behandelte Literatur. Bei der Leitweglenkung sind Wirtschaftlichkeitsgesichtspunkte wesentlich. Verbindungen sollen generell über möglichst kurze Leitungswege hergestellt werden. Sind Leitungsbündel besetzt, sollen Verbindungen auch über weitere Wege, gegebenenfalls auch Umwege hergestellt werden. Führt dabei aber die Herstellung von Verbindungen über Umwege zu einer zu sehr erhöhten Inanspruchnahme des gesamten Leitungsnetzes, so kann es auch von Vorteil sein, die Umwegmöglichkeiten für herzustellende Verbindungen zu beschränken. Der in diesem Zusammenhang bekannte Effekt der Verkehrsverdrängung soll vermieden werden.

In einer Schaltungsanordnung der von der Erfindung vorausgesetzten Art geht es nicht allein um eine hinsichtlich der jeweiligen Verbindungsweg-Länge optimale Nutzung des Gesamt-Leitungsnetzes (also des Netzes von Leitungsbündeln und/oder Kanalbündeln, die die Vermittlungsstellen an den verschiedenen Orten miteinander verbinden), sondern um den weiteren Zusammenhang, daß Kanalbündel auch zweier - oder auch mehrerer -Klassen der erläuterten verschiedenen Arten parallel zwischen je zwei Netzknoten angeordnet sein können.

Für die Erfindung besteht die Aufgabe, für eine Schaltungsanordnung der von jener vorausgesetzten Art geeignete technische Maßnahmen anzugeben, um mit deren Hilfe ein Netz von Bündeln von verbindungsindividuell belegbaren Kanälen zweier - oder auch mehrerer - Klassen möglichst vorteilhaft zu nutzen. Der erstrebte Nutzen bezieht sich sowohl auf die Frage von Abkürzungswegen, Regelwegen und Umwegen, bezieht sich also auf die Zielsetzung, insgesamt gesehen möglichst kurze Leitungswege für die Verbindungen zu benutzen, als auch darauf, die durch die Kanäle gegebenen technischen Übertragungsmöglichkeiten vorteilhaft zu nutzen, wobei nicht nur Vorteile für den Benutzer wesentlich sind, sondern auch Vorteile für den Betreiber von Vermittlungsanlagen, der ja für die von ihm zur Verfügung gestellten Dienste nach Maßgabe derselben entsprechende Gebühren einzunehmen berechtigt ist.

Die Erfindung ist dadurch gekennzeichnet, daß die Zusatzinformation nach Maßgabe der technischen Übertragungsmöglichkeiten, die durch die jeweilige Ursprungs- und/oder Zielvermittlungsstelle und/oder durch Kanalbündel von bzw. zu diesen gegeben sind, aus einer entsprechenden Ursprungsinformation und/oder aus einer durch die Wahlinformation gegebenen Zielortsinformation abgeleitet wird, und daß bei einer der Verbindungsherstellung dienenden Auswahl eines freien Kanals aus einer Mehrzahl von Kanalbündeln, die zum erreichen des betreffenden angewählten Zielortes hierbei überhaupt in Frage kommen, eines dieser Kanalbündel nach einer für sie aufgrund der jeweils gegebenen Zusatzinformation geltenden Auswahlreihenfolge in der Weise vorausgewählt wird, daß aufgrund der bei einer Verbindungsherstellung in einer Vermittlungsstelle vorliegenden Zielortsinformation die überhaupt infrage kommenden Kanalbündel in eine Liste eingetragen werden und daß aufgrund der Zusatzinformation die Richtung der Absuchreihenfolge sowie deren Startpunkt und/oder deren Endpunkt bestimmt ist.

Wie sich anhand von praktischen Anwendungsfällen zeigt, kann dem mit Hilfe der erfindungsgemäßen Leitweglenkung erzielbaren Nutzen eine zwingende Forderung bezüglich bestimmter geforderter Übertragungsmöglichkeiten zugrunde liegen, ebenso aber auch lediglich ein zu erstrebender Benutzer-Vorteil, der wünschenswert, aber nicht zwingend ist. Der Nutzen kann sich aber auch darauf beschränken, daß eine Verbindung überhaupt durchschaltbar ist, ohne daß die sich bietenden Übertragungsmöglichkeiten in vollem Umfange nutzbringend überhaupt zum Tragen kommen. Ebenso kann es sogar nützlich sein, bei der Herstellung einer Verbindung, für die erweiterte Übertragungsmöglichkeiten von vornherein nicht erforderlich sind und jedenfalls ungenutzt bleiben würden, Kanäle bestimmter Klassen, und zwar solche mit erweiterten Übertragungsmöglichkeiten, von der jeweiligen Auswahl auszuschließen. Diese und weitere Möglichkeiten, die im Zuge der Beschreibung eines Ausführungsbeispiels noch mehr im Detail beschrieben werden, sind durch die Erfindung eröffnet.

Durch die deutsche Auslegeschrift 1 148 602 ist es bereits für eine Schaltungsanordnung zur Auswahl von Verbindungswegen in einem Selbstwähl-Fernsprechnetz bekannt, Einrichtungen zur Identifizierung desjenigen Leitungsweges, zu dem eine ankommend belegte Verbindungsleitung gehört, und Einrichtungen zum Empfang von die Rufnummer der angerufenen Vermittlungsstelle anzeigenden Signalen vorzusehen. Diese bekannte Anordnung sieht weiterhin Einrichtungen vor, die die Identifizierung des Leitungsweges und die die Rufnummer der gerufenen Vermittlungsstelle anzeigenden Signale kombinieren, um dadurch diejenigen von der betreffenden Fernmeldevermittlungsstelle abgehenden Verkehrswege zu bestimmen, die für die Herstellung der Verbindung aufgrund der Netzplanung, insbesondere des Dämpfungsplanes zulässig sind und daher gewählt werden können. Bei dieser bekannten Anordnung geht es also darum, in einem Fernmeldevermittlungsnetz nur solche Verbindungen zutande kommen zu lassen, die hinsichtlich der Gesamt-Dämpfung auch noch tatsächlich brauchbar sind. Bei einer Hintereinanderschaltung von Leitungen - im vorliegenden Falle von Fernverbindungsleitungen - addieren sich bekanntlich die einzelnen Leitungsdämpfungen. Bei der zuletzt genannten bekannten Anordnung wird nun lediglich dafür gesorgt, daß die sich bei Hintereinanderschaltung von Fernverbindungsleitungen aufsummierende Gesamt-Dämpfung insgesamt nicht zu hoch wird. - Es wird aber in diesem bekannten Falle kein Einfluß auf Leitweglenkung dahingehend genommen, daß durch eine entsprechende Zusatzinformation der Ablauf der Leitwegelenkungs-Bündel-Auswahlvorgänge hinsichtlich Absuchreihenfolge und Auslassung bestimmter Bündel modifiziert wird.

Durch die deutsche Patentschrift 2 220 262 ist es für in einem nicht hierarchischen Fernmeldenetz eingesetzte Vermittlungsanlagen bereits bekannt, mit fortschreitendem Verbindungsaufbau eine den Verbindungsherstellungsinformationen mitgegebene Ergänzungsinformation ebenfalls fortschreitend zu modifizieren und zwar nach Maßgabe der pro jeweils belegte Leitung gegebenen Leitungsqualität. Das Endergebnis der fortschreitenden und mehrfach wiederholten Modifizierung dieser Ergänzungsinformation führt zum Abbruch der Verbindungsherstellung oder zur Modifikation des Verbindungsaufbaues oder zur Abgabe einer Mitteilung an die betreffenden Teilnehmerstellen über eine maximal zulässige Übertragungsgeschwindigkeit, was also insbesondere Fernschreib- und Datenverkehr betrifft. Soweit es hierbei um eine Modifikation des Verbindungsaufbaues geht, wird in diesem Zusammenhang im bekannten Fall von einem Verbindungsaufbau-Prinzip ausgegangen, bei dem Suchmeldungen zunächst strahlenförmig vom Ursprungsort ausgehen über viele Wege des Maschennetzes und schließlich auch über viele verschiedene Wege am Zielort eintreffen, und bei dem dann in umgekehrter Richtung auf einem einzigen dieser Wege eine Rückmeldung bis zum Ursprungsort durchgegeben wird, wodurch der gesuchte und gefundene Verbindungsweg dann durchgeschaltet wird. Die erwähnte Modifikation des Verbindungsaufbaues geht also von der Mehrzahl der mittels der Suchmeldungen zunächst aufgefundenen, hinsichtlich der Weg-Verläufe bereits eindeutig definierten vorbereiteten und so zur Auswahl stehenden verschiedenen Verbindungswegen aus und bewirkt eine Auswahl eines einzigen dieser Wege unter dem Aspekt einer erforderlichen Verbindungsqualität. Es wird aber auch in diesem bekannten Falle kein Einfluß auf Leitweglenkung dahingehend genommen, daß durch eine entsprechende Zusatzinformation der Ablauf der Leitweglenkungs-Bündel-Auswahlvorgänge hinsichtlich Absuchreihenfolge und Auslassung bestimmter Bündel modifiziert wird.-

Ferner ist es durch die deutsche Patentschrift 1 044 901 für einen Leitwegzuordner bereits bekannt, den Ursprung einer Verbindung bei der Gewinnung von Grunddaten für die verbindungsindividuelle Gebührenerfassung zusammen mit den für die Verbindungsherstellung maßgeblichen Zielortsinformationen mit zu berücksichtigen. Auch hierbei werden die bereits erwähnten Leitweglenkungs-Zusammenhänge nicht berührt.

Gegenüber den zuletzt erwähnten bekannten Anordnungen beschreitet die Erfindung einen anderen Weg. Unter anderem geht sie auch davon aus, daß Bündel von Leitungen bzw. Kanälen wenigstens zweier Klassen in einem wenigstens teilweise vermaschtem Fernmeldevermittlungsnetz vorgesehen sind. Während also in den beiden ersten der drei zuletzt genannten bekannten Fälle die Leitungsqualität mit zunehmender Anzahl von Verbindungsabschnitten (Anzahl von hintereinander geschalteten Fernverbindungsleitungen) abnimmt und mit Rücksicht hierauf eine Herstellung von unvorteilhaften Verbindungen verhindert wird, werden durch die Erfindung in die Wegeauswahl zur Leitweglenkung außer der Zusatzinformation, die bezüglich der Übertragungseigenschaften (Bandbreite sowie Umfang des Spektrums der insgesamt übertragbaren Signalisierungsinformationen) bestimmte Forderungen angibt, mögliche Kommunikationsarten angebende Klassenmerkmale der betreffenden Bündel einbezogen, die die zur Auswahl stehenden Bündel klassifizieren. Bei der Wegeauswahl zur Leitweglenkung wird von der pro angewählten Zielort überhaupt in Frage kommenden Gesamtheit von Bündeln von Leitungen bzw. Kanälen eine durch die jeweilige Zusatzinformation modifizierte Auswahl zur Leitweglenkung getroffen. Dabei wird durch die Zusatzinformation sowohl die Auswahlreihenfolge bei der Wegeauswahl modifiziert als auch ein Teil der zunächst insgesamt überhaupt in Frage kommenden Bündel von der Auswahl augeschlossen, und zwar solche Bündel, die die für die jeweils herzustellende Verbindung geforderte Kommunikationsart nicht ermöglichen, bzw. die die für die jeweils herzustellende Verbindung überhaupt nicht brauchbaren (höheren) Kommunikationsarten mit umfassen und diesbezüglich sowieso ungenutzt bleiben würden.

In der Zeichnung ist ein Ausführungsbeispiel der Erfindung nur in wesentlich zu ihrem Verständnis beitragenden Bestandteilen dargestellt, worauf dieselbe jedoch keineswegs beschränkt ist.

Für Fernmeldevermittlungsnetze sind bereits verschiedene Strukturen bekannt. Im wesentlichen unterscheidet man Sternnetz- und Maschennetzstrukturen. Sternnetze sind in der Regel hierarchisch in mehreren Netzebenen aufgebaut. Ferner werden Sternnetze in der Regel teilweise vermascht, indem ein zunächst rein sternförmig, insbesondere in mehreren Netzebenen hierarchisch strukturiertes Netz mit einem Maschennetz überlagert wird. Solche netze sind in der deutschen Offenlegungsschrift 25 33 462 (VPA 75 P 6141) sowie in der darin behandelten Literatur dargestellt und beschrieben. Ferner sind in der deutschen Offenlegungsschrift 33 18 544 (VPA 83 P 1349) diese Netzstrukturen und ihre typischen Merkmale eingehend erläutert.

Ein wesentlicher Vorteil des hierarchisch strukturierten Sternnetzes liegt unter anderem in seiner klaren Gliederung, die einen übersichtlichen offenen Numerierungsplan erlaubt. Ferner weisen Sternnetze eine geringere Zahl von umso stärkeren Leitungsbündeln auf. Die Leitungsausnutzung insgesamt ist infolgedessen besser als in Maschennetzen. Demgegenüber liegt ein wesentlicher Vorteil von Maschennetzen gegenüber Sternnetzen darin, daß Maschennetze eine Verbindungsdurchschaltung in der Regel über insgesamt kürzere und damit wirtschaftlichere Verbindungswege erlauben. Gegenüber der strengen Hierarchie eines Sternnetzes stellen die Leitungsbündel eines Maschennetzes Querverbindungen dar, weswegen sie auch als "Querverbindungs-Leitungsbündel" bezeichnet werden. Ein Querweg ist ein Direktweg in einem hierarchischen Nachrichtennetz, der zwei oder mehr Abschnitte des sogenannten Kennzahlweges umgeht. Querwege ermöglichen es also, Verbindungen über weniger Vermittlungsstellen herzustellen als bei Verwendung des Kennzahlweges, wodurch auch die Vermittlungsstellen insgesamt entlastet werden; sofern Querverbindungs-Leitungsbündel (entsprechend Querwegen) über eigene kürzere Trassen geführt werden, können Verbindungen auch über insgesamt kürzere Verbindungswege hergestellt werden. Dadurch kann also ein Nachteil von rein sternförmig aufgebauten Vermittlungsnetzen wesentlich eingeschränkt werden. Querverbindungs-Leitungsbündel werden insbesondere zwischen solchen Vermittlungsstellen angelegt, die einen bedeutenden Verkehr miteinander haben. Diese Querverbindungs-Leitunsbündel überziehen also ein reines, in mehreren Netzebenen aufgebautes Sternnetz mit einem Maschennetz, welches zweckmäßig nur insoweit ausgebaut und in sich geschlossen ist, wie es von den örtlichen Verkehrslasten zwischen den verschiedenen Vermittlungsstellen und der Wirtschaftlichkeit bestimmt ist.

Im oberen Teil der Zeichnung ist ein sternförmig strukturiertes und teilweise maschenförmig überlagertes Frenmeldevermittlungsnetz dargestellt, das Vermittlungsstellen in drei Netzebenen aufweist, und zwar Zentralvermittlungsstellen Z1, Z2 und Z3, Hauptvermittlungsstellen H11, H12 und H21 und Endvermittlungsstellen E111 bis E213. Die gegebene Darstellung gibt das betreffende Fernmeldevermittlungsnetz lediglich auszugsweise wieder, um das beschriebene Ausführungsbeispiel der Erfindung möglichst gut anschaulich zu machen.

Die genannten Vermittlungsstellen sind untereinander in bekannter Weise durch Leitungsbündel verbunden. Bei diesen Leitungsbündeln kann es sich ebenso gut auch um Kanalbündel von entsprechenden Übertragungssystemen handeln. Die betreffenden Leitungen bzw. Kanäle sind verbindungsindividuell belegbar. Es gibt bekanntlich einfach gerichtete und doppelt gerichtete Leitungen, womit die Richtung der Verbindungsherstellung gemeint ist. Jede verbindungsindividuell belegbare Leitung bzw. jeder verbindungsindividuell belegbare Kanal bietet eine Übertragungsmöglichkeit von verbindungsindividuellen Nachrichten in jeder der beiden Richtungen zwischen den betr. beiden Teilnehmern.

Wie aus der Zeichnung ersichtlich, sind die Vermittlungsstellen teilweise durch ausgezogene Linien miteinander verbunden. Diese Linien sollen die Kanalbündel eines hierarchisch strukturierten Sternnetzes andeuten. Die Zentralvermittlungsstellen sind durch ein Maschennetz untereinander verbunden. Die Hauptvermittlungsstellen sind jeweils einer Zentralvermittlungsstelle zugeordnet und mit dieser über entsprechende Bündel des Sternnetzes verbunden. Ebenso sind die Endvermittlungsstellen jeweils einer Hauptvermittlungsstelle zugeordnet und ebenso über Bündel des Sternnetzes mit derselben verbunden. Für Verbindungen zwischen Teilnehmerstellen, die an verschiedene Endvermittlungsstellen angeschlossen sind, bilden die Bündel des Sternnetzes die Gesamtheit der Wegemöglichkeiten für den sogenannten Kennzahlweg.

Wie außerdem aus der Zeichnung ersichtlich, sind die dargestellten Vermittlungsstellen der verschiedenen Netzebenen außerdem über gestrichelte Linien miteinander verbunden. Diese gestrichelten Linien deuten Bündel eines das Sternnetz teilweise überlagernden Maschennetzes an. Deren Bedeutung und technische Funktion wurde bereits erläutert. Wie erwähnt, ist durch das Sternnetz für jede herzustellende Verbindung zunächst einmal der Kennzahlweg vorgegeben. Die Bündel des überlagerten Maschennetzes ermöglichen eine Herstellung von Verbindungen über Querwege, die in der Regel kürzer und deshalb wirtschaftlicher sind als Verbindungen über den Kennzahlweg. Darüber hinaus besteht die Möglichkeit, im Besetztfall von Leitungsbündeln, insbesondere des Sternnetzes, Verbindungen auch über Umwege herzustellen.

Für eine Verbindung zwischen zwei Teilnehmerstellen, die zum Beispiel an die Endvermittlungsstellen E113 und E121 angeschlossen sind, gibt es verschiedene Möglichkeiten. Der Kennzahlweg verläuft über die Vermittlungsstellen H12, Z1 und H11. Ein Querweg kann zum Beispiel ausschließlich über die Vermittlungsstelle H12 verlaufen. Ein anderer Querweg kann über die Vermittlungsstellen H12 und Z1 verlaufen. Darüber hinaus bestehen auch Umwegmöglichkeiten, zum Beispiel über die Vermittlungsstellen H12, Z1, Z3 und H11 oder über die Vermittlungsstellen H12, Z1, Z2, Z3 und H11.

Jede in der Zeichnung dargestellte unmittelbare Verkehrsbeziehung, die direkt zwischen zwei Vermittlungsstellen besteht, ist also durch ein Bündel von Leitungen bzw. Kanälen realisiert. In der Regel ist jede dieser direkten Verkehrsbeziehungen durch Bündel von Leitungen bzw. Kanälen realisiert, die eine Verbindungsherstellung in der einen Verbindungsherstellungsrichtung und in der anderen Verbindungsherstellungsrichtung ermöglichen. Dabei können die Leitungen bzw. Kanäle hinsichtlich der Verbindungsherstellungsrichtung jeweils doppelt gerichtet sein, und es können auch sogenannte einfach gerichtete Leitungen bzw. Kanäle vorgesehen werden, wobei einfach gerichtete Leitungen bzw. Kanäle teils für die eine und teils für die andere Verbindungsherstellungsrichtung vorgesehen sind.

Wie das weiter oben erwähnte Sonderheft der Zeitschrift "telcom report" (Februar 1985, 8. Jahrgang) beschreibt, gibt es außer Vermittlungseinrichtungen der konventionellen Fernsprechtechnik und der konventionellen Fernschreibtechnik auch Vermittlungsanlagen einer modernen Fernmeldetechnik, die eine große Anzahl verschiedener Arten von Kommunikationsmöglichkeiten umfaßt. Diese sind bereits auf dem Titelblatt des genannten Sonderheftes aufgeführt. Diese verschiedenen Arten von Kommunikationsmöglichkeiten setzen entsprechende Leitungen bzw. Kanäle voraus. Diese Leitungen bzw. Kanäle müssen eine geeignete Bandbreite aufweisen. Für Fernschreibzwecke genügt bekanntlich eine relativ geringe Bandbreite. Für Fernsprechverbindungen ist jedoch bereits eine größere Bandbreite erforderlich. Darüber hinaus erfordern Bildfernsprechverbindungen eine noch größere Bandbreite.

Im Zusammenhang der verschiedenen Arten von Kommunikationsmöglichkeiten bestehen auch verschiedene Systeme der Übertragung von Signalisierungsinformationen. Wie erwähnt, sind Signalisierungsinformationen zusätzliche begleitende Schaltkennzeichen für den Aufbau, die Aufrechterhaltung, die Bezahlung und die Auslösung jeweils einer Verbindung, zum Beispiel Belegungskennzeichen, Wahlkennzeichen, Wahlendekennzeichen, Meldekennzeichen, Gebührenzählimpulse, Endekennzeichen, Auslösekennzeichen und dergleichen. Für die Übertragung verbindungsindividueller Signalisierungsinformationen bestehen grundsätzlich zwei bekannte Möglichkeiten, nämlich die Übertragung über den jeweils durchgeschalteten Verbindungsweg auf zusätzlich zu dessen Nachrichtenweg mit demselben durchgeschalteten Adern, bzw.mittels von den übertragenen Nachrichteninformationen unverwechselbar unterscheidbaren Schaltkennzeichen einerseits, oder die Übertragung über einen für die Leitungen bzw. Kanäle eines ganzen Bündels oder auch mehrerer Bündel jeweils gemeinsamen Signalisierungskanal adererseits.

Fernmeldevermittlungssysteme verschiedener Bauart unterscheiden sich nun - wie zuvor dargelegt - unter anderem hinsichtlich der jeweils durch sie gegebenen Möglichkeiten der Signalisierung, insbesondere aber hinsichtlich des Umfanges des Gesamt-Spektrums der verbindungsindividuell übertragbaren Signalisierungszeichen, seien diese räumlich parallel zum durchgeschalteten Verbindungsweg übertragbar oder seien sie über den bündelgemeinsamen Signalisierungskanal zu übertragen. Ebenfalls oder zusätzlich können sich Fernmeldevermittlungssysteme verschiedener Bauart - wie ebenfalls bereits weiter oben erwähnt -durch die Bandbreite der verfügbaren Leitungen bzw. Kanäle voneinander unterscheiden, wie zum Beispiel bei Fernschreibkanälen einerseits und Fernsprechkanälen andererseits oder außerdem wie bei Breitbandkanälen zum Beispiel für Bildfernsprechverbindungen. Ebenso wie Breitbandkanäle in entsprechenden Kanalbündeln können auch in den betreffenden Vermittlungsstellen Breitband-Koppelfelder vorgesehen werden. Breitbandverbindungen können aber auch als Mehrkanalverbindungen aus entsprechend mehreren Kanälen normaler Bandbreite - d.h. bezüglich Fernsprechverkehr konventioneller Art normaler Bandbreite - aufgebaut werden also unter Benutzung normaler Kanäle und/oder normaler Koppelfelder.

Bezüglich der Bandbreite von verbindungsindividuell belegbaren Leitungen bzw. Kanälen und von über Koppelfelder herstellbaren Durchschaltewegen sind diese unter dem Aspekt des Umfanges der durch sie gegebenen Übertragungsmöglichkeiten, die also die Nachrichtenübertragung selbst und/oder die Übertragung von Signalisierungszeichen betreffen können, in verschiedene Klassen unterscheidbar. Eine unterste von ihnen möge lediglich unerweiterte Übertragungsmöglichkeiten aufweisen. Weitere Klassen mögen demgegenüber mehr oder weniger erweiterte Übertragungsmöglichkeiten aufweisen. Ebenso wie diese unterschiedlichen Übertragungsmöglichkeiten durch unterschiedliche Bandbreiten gegeben sein können, können sie auch durch unterschiedliche Vielfalt von möglichen Signalisierungsinformationen gegeben sein.

Die in der Zeichnung teils als durchgezogene Linien und teils als gestrichelte Linien dargestellten Verkehrsbeziehungen zwischen den verschiedenen Vermittlungsstellen der verschiedenen Netzebenen sind - wie bereits erläutert - mit Hilfe von Leitungsbündeln bzw. Kanalbündeln realisiert, deren Leitungen bzw. Kanäle verbindungsindividuell belegbar sind. Es möge nun vorgesehen sein, daß wenigstens einige dieser Verkehrsbeziehungen durch Leitungsbündel bzw. Kanalbündel verschiedener Klassen realisiert sind, wobei diese Bündel der verschiedenen Klassen, die jeweils parallel zueinander liegen, miteinander eine Verkehrsbeziehung realisieren.

Außerdem mögen die dargestellten Vermittlungsstellen wenigstens teilweise in Form von moderner Fernmeldevermittlungstechnik, zum Beispiel ISDN-Technik, sei es in dieser oder in anderer Technik mit Signalisierung nach "Common Channel Signaling" No.7 (Rotbuch des CCITT, RECOMMENDATION Q.761-766), aufgebaut sein.

Die Figur zeigt also Fernsprechvermittlungsanlagen, die in einem wenigstens teilweise maschenartigen Netz von Bündeln von verbindungsindividuell belegbaren Kanälen angeordnet sind. Die Vermittlungsstellen befinden sich in Netzknoten in diesem Netz. Die genannten Kanäle sind in diesen Vermittlungsstellen verbindungsindividuell vermittlungstechnisch zusammenschaltbar. Es mögen Fernschreibleitungen bzw. Fernschreibkanäle, Fernsprechleitungen bzw. Fernsprechkanäle sowie ISDN-Leitungen bzw.ISDN-Kanäle vorgesehen sein. Es sind also Kanalbündel mehrerer hinsichtlich des Umfanges der durch die Kanäle gegebenen technischen Übertragungsmöglichkeiten, das heißt unerweitert oder - mehr oder weniger - erweitert sich unterscheidenden Klassen vorgesehen. Dabei können Kanalbündel auch zweier - oder auch mehrerer - Klassen parallel zwischen je zwei Netzknoten angeordnet sein.

Von der Zentralvermittlungsstelle Z1 sind zur weiteren Erläuterung des erfindungsgemäßen Ausführungsbeispieles noch mehr Details dargestellt. Es ist ein zentrales Koppelfeld K gezeigt, welches zwecks vereinfachter Darstellung als ein Koppelfeld mit gestreckter Gruppierung realisiert ist. Dieses Koppelfeld kann jedoch ebenso auch als ein Koppelfeld mit Umkehrgruppierung aufgebaut sein.

Die Leitungen bzw. Kanäle sämtlicher zu dieser Vermittlungsstelle Z1 führenden Leitungsbündel bzw. Kanalbündel sind - soweit es sich um Leitungen bzw. Kanäle für abgehende und für sowohl abgehende als auch ankommende Verbindungsherstellungsrichtung handelt - an die Ausgänge des Koppelfeldes K (in der Zeichnung rechts von demselben) angeschlossen. Ebenfalls sind die Leitungen bzw. Kanäle dieser Bündel eingangsseitig an das Koppelfeld K (in der Zeichnung links von demselben) angeschlossen, soweit es sich um Leitungen bzw. Kanäle für ankommende bzw. sowohl ankommende als auch abgehende Verbindungsherstellungsrichtung handelt. Verbindungen über das Koppelfeld K werden immer von einem seiner Eingänge zu einem seiner Ausgänge hergestellt.

Die links- und rechtsseitig an das Koppelfeld K herangeführten Leitungen bzw. Kanäle sind mittels duchgezogener oder gestrichelter Linien angedeutet. Jede solche Linie gibt eine Verkehrsbeziehung zwischen der Zentralvermittlungsstelle Z1 und den verschiedenen anderen Vermittlungsstellen wieder, wie es sich aus der Zeichnung eindeutig ergibt. Jede solche Verkehrsbeziehung kann - wie ausgeführt wurde - durch ein einziges Leitungsbündel bzw. Kanalbündel realisiert sein. Dabei kann ein solches Bündel auch auf Leitungen bzw. Kanäle nur einer einzigen Verbindungsherstellungsrichtung beschränkt sein. Eine Verkehrsbeziehung kann aber auch durch zwei oder mehr Leitungsbündel bzw. Kanalbündel realisiert sein. Dies können auch Bündel unterschiedlicher Klassen in dem weiter oben erläuterten Sinne sein.

Die eingangsseitig an das Koppelfeld K (linksseitig von demselben) angeschlossenen Leitungen bzw. Kanäle der verschiedenen Bündel sind über leitungsindividuelle bzw. kanalindividuelle Verbindungssätze an die Eingänge des Koppelfeldes K angeschlossen. Stellvertretend für diese Vielzahl von Verbindungssätzen ist der eine Verbindungssatz R dargestellt. Diese Verbindungssätze dienen unter anderem dazu, bei ankommender Belegung einer Leitung bzw. eines Kanals die über dieselbe bzw. denselben eintreffenden Wahlinformationen und sonstigen Signalisierungszeichen aufzunehmen und an einen Speicher T für Verbindungsinformationen weiterzuleiten. In anderen Fernmeldevermittlungsanlagen werden Speicher ähnlicher Art auch als Register bezeichnet. An dieser Stelle sei darauf hingewiesen, daß der Vermittlungsstelle Z1 auch eine Technik zugrunde liegen kann, wie sie in dem bereits erwähnten Sonderheft beschrieben ist, sowie auch eine Technik, wie sie ebenfalls in der Zeitschrift "telcom report" im Beiheft des vierten Jahrganges (1981) beschrieben ist.

Der Speicher T für Verbindungsinformationen ist mehrfach vorgesehen und ist verbindungsindividuell belegbar. Er umfaßt Speicherteile U, W und X und einen Vergleicher V. Der Speicherteil W dient zur Aufnahme der vom jeweils rufenden Teilnehmer, zum Beispiel Tn1, abgegebenen Wahlinformationen. Diese umfassen (bei Inlands-Fernverbindungen) die Ortskennzahl und die Teilnehmerrufnummer des jeweils angewählten Teilnehmers.

Der Speicher T für Verbindungsinformationen enthält ferner einen Speicherteil U für eine Ursprungsinformation. Diese umfaßt die Ortskennzahl derjenigen Endvermittlungsstelle, an die der jeweils rufende Teilnehmer, zum Beispiel Tn1, angeschlossen ist. Außerdem enthält die Ursprungsinformation die Rufnummer des jeweils rufenden Teilnehmers. Diese Rufnummer wird durch einen Identifizierungsvorgang in an sich bekannter Weise ermittelt, zum Beispiel in der Weise, wie es in der DE-PS 2 714 401 (VPA 77 P 6048) beschrieben ist. Bei der unter der Kurzbezeichnung ISDN (s.o.) bekannten Technik wird die Rufnummer des rufenden Teilnehmers immer in der Signalisierungsinformation mitgeliefert. Ebenfalls sei in diesem Zusammenhang auch die DE-OS 3 638 684 (VPA 86 P 1806) hingewiesen. Bei der Verbindungsherstellung empfängt der Speicher für Verbindungsinformationen außer der Teilnehmerrufnummer des jeweils rufenden Teilnehmers auch die Ortskennzahl der Endvermittlungsstelle, an die dieser Teilnehmer angeschlossen ist. Aufgenommen werden diese den jeweils rufenden Teilnehmer kennzeichnenden Ursprungsinformationen im Speicherteil U für die Ursprungsinformation.

Wünscht ein Teilnehmer, zum Beispiel der Teilnehmer an der Teilnehmerstelle Tn1, einen anderen Teilnehmer, zum Beispiel den Teilnehmer an der Teilnehmerstelle Tn2 zu sprechen, so wählt er nach der Verkehrsausscheidungsziffer für den Fernverkehr (Null) zunächst die Ortskennzahl und dann die Teilnehmerrufnummer des gewünschten Teilnehmers. Die Ortskennzahl und die Teilnehmerrufnummer werden dann, wenn bei der betreffenden Verbindungsherstellung die Zentral-Vermittlungsstelle Z1 erreicht worden ist, im Speicherteil W für Wahlinformationen des Speichers T für Verbindungsinformationen gespeichert.

Zur weiteren Verbindungsherstellung wird die gespeicherte Ortskennzahl vom Speicherteil W für Wahlinformationen weitergegeben an einen Speicher Y für Verkehrsmöglichkeiten-Daten. Wie sich aus der Zeichnung bereits ergibt, bestehen zwischen den Endvermittlungsstellen E122 und E113 viele verschiedene Verkehrsmöglichkeiten. Außer einem Querweg, der direkt von der Zentralvermittlungsstelle Z1 zur Endvermittlungsstelle E113 führt, besteht der Kennzahlweg, der von der Zentralvermittlungsstelle Z1 über die Hauptvermittlungsstelle H11 zur Endvermittlungsstelle E113 führt. Darüber hinaus gibt es eine weitere Verkehrsmöglichkeit, die zusätzlich über die Zentralvermittlungsstelle Z3 führt. Diese Verkehrsmöglichkeit stellt einen Umweg dar. Einen noch größeren Umweg stellt eine weitere Verkehrsmöglichkeit dar, die von der Zentralvermittlungsstelle Z1 über die Zentralvermittlungsstellen Z2 und Z3 und über die Hauptvermittlungsstelle H11 führt. In ähnlicher Weise bestehen auch in allen anderen Fällen zwischen je zwei Endvermittlungsstellen in der Regel jeweils mehrere verschiedene Verkehrsmöglichkeiten.

Die an die Endvermittlungsstellen angeschlossenen Teilnehmerstellen sind überwiegend Fernsprechteilnehmerstellen. Wie jedoch das bereits genannte Sonderheft aus der Zeitschrift "telcom report" (8. Jahrgang/Februar 1985) beschreibt, gibt es außer der Kommunikationsmöglichkeit Fernsprechen eine größere Anzahl von weiteren Kommunikationsmöglichkeiten, die auf dem Titelblatt dieser Zeitschrift aufgeführt sind.

Welche Kommunikationsmöglichkeiten zwischen zwei Teilnehmerstellen, die miteinander verbunden werden sollen, überhaupt bestehen können, ergibt sich jeweils aus der Art jeder der betreffenden beiden Teilnehmerstellen. Ist eine der beiden Teilnehmerstellen eine Fernsprechteilnehmerstelle nur für Fernsprechverbindungen, und ist die andere Teilnehmerstelle für Bildfernsprech-Verbindungen eingerichtet, so ist die einzige Kommunikationsmöglichkeit zwischen diesen beiden Teilnehmerstellen das Fernsprechen. Ist eine der beiden Teilnehmerstellen für Bildfernsprechen eingerichtet, und ist die andere der betreffenden beiden Teilnehmerstellen zusätzlich mit einem Schnellfax-Gerät ausgerüstet, so besteht ebenfalls zwischen diesen beiden Teilnehmerstellen als einzige Kommunikationsmöglichkeit diejenige des Fernsprechens.

Insoweit zusammenfassend kann festgestellt werden, daß die Kommunikationsmöglichkeiten zwischen je zwei Teilnehmerstellen beschränkt sind auf dasjenige, was jeweils an jeder der beiden Teilnehmerstellen an Kommunikationsmöglichkeiten gegeben ist. Hierbei kann auch der Fall auftreten, daß zwei Teilnehmer überhaupt nicht miteinander kommunizieren können, weil sie nichtkompatible Dienste, z.B. Datenübertragung und Bilfernsprechen, benutzen, oder weil z.B. eine Teilnehmeranschluß mit einem Fax die Rufnummer einer Teilnehmerstelle wählt, die an einer konventionellen Vermittlungsstelle angeschlossen ist.

Durch die Ursprungsinformation ist die Teilnehmerstelle eines jeweils rufenden Teilnehmers eindeutig gekennzeichnet. Durch die Wahlinformation ist jeweils die Teilnehmerstelle eines angewählten Teilnehmers eindeutig gekennzeichnet. Außer der jeweiligen Identität des rufenden Teilnehmers und der Identität des jeweils angerufenen Teilnehmers ist durch die Ursprungsinformation und durch die Wahlinformationen auch die jeweilige Art beider Teilnehmerstellen bestimmbar; aus der Ursprungsinformation sowie aus der Wahlinformation kann also abgeleitet werden, ob und welche Kommunikationsmöglichkeiten für die Teilnehmerstelle des jeweils rufenden Teilnehmers und welche Kommunikationsmöglichkeiten für die Teilnehmerstelle des jeweils angewählten Teilnehmers bestehen. Folglich läßt sich aus der Ursprungsinformation und der Wahlinformation pro Verbindungsherstellung ableiten, welche für die betreffenden beiden Teilnehmerstellen übereinstimmenden Kommunikationsmöglichkeiten bestehen. Hierzu ist der Vergleicher V beim Speicher T für Verbindungsinformationen vorgesehen. Er empfängt bei einer Verbindungsherstellung jeweils die Ursprungsinformationen vom Speicherteil U und die Wahlinformationen vom Speicherteil W und leitet hieraus ab, welcher Art die betreffenden beiden Teilnehmerstellen sind und welche Kommunikationsmöglichkeiten übereinstimmend bei jeder dieser beiden Teilnehmestellen bestehen.

In der Zeichnung ist außerdem ein Speicherteil X für Verkehrs-Möglichkeiten-Daten dargestellt. Es ist vorgesehen, daß ein jeweils rufender Teilnehmer bei Verbindungsherstellung solche Verkehrsmöglichkeiten-Daten abgeben kann. Handelt es sich z.B. um eine Teilnehmerstelle, von und zu der Bildfernsprechverbindungen hergestellt werden können, so kann ein Teilnehmer an einer solchen Teilnehmerstelle durch Abgabe entsprechender Verkehrsmöglichkeiten-Daten angeben, ob er eine Bildfernsprechverbindung herzustellen wünscht oder lediglich eine einfache Fernsprechverbindung. Ebenso kann er Verkehrsmöglichkeiten-Daten bezüglich aller weiteren gewünschten oder geforderten Kommunikationsarten abgeben. Diese Daten können vom Teilnehmer und/oder von seiner Vermittlungsstelle kommen, z.B. "geschlossene Benutzerklasse", um zu ermitteln, ob der angewählte Teilnehmer überhaupt gerufen werden darf. Diese Verkehrsmöglichkeiten-Daten werden bei einer Verbindungsherstellung im Speicherteil X für Kommunikationsarten-Daten aufgenommen.

Wie aus der Zeichnung ersichtlich ist, ist ferner der bereits erwähnte Speicher Y für Verkehrsmöglichkeiten-Daten vorgesehen. Dieser Speicher dient zur Realisierung dessen, was bei älteren Fernsprech-Fernvermittlungsanlagen mit "Leitweglenkung" bezeichnet ist, und was dazu dient, unter mehreren für eine bestimmte Verbindungsherstellung in Frage kommenden Bündeln mit jeweils wenigstens einer freien Leitung - bzw. eines freien Kanals -ein günstigstes auszuwählen. Wie bereits ausgeführt wurde, wird die jeweils gewählte Ortskennzahl sowie die jeweils gewählte Teilnehmerrufnummer im Speicherteil W für Wahlinformationen gespeichert. Die Ortskennzahl wird nun vom Speicher T für Verbindungsinformationen, und zwar von seinem Speicherteil W für Wahlinformationen, zur Suche einer freien Leitung bzw. eines freien Kanals in einem geeigneten Bündel an den Speicher Y für Verkehrsmöglichkeiten-Daten weitergegeben. Mit Hilfe einer Ansteuereinrichtung A wird eine bestimmte Zeile in einem aus Speicherzeilen b1/c1 bis bn/cn bn/cn bestehenden Bündelspeicher aufgesucht. In Zielortsadreßfeldern b1 bis bn sind z.B. sämtliche Kennzahlen, die die jeweils abgehenden Richtungen bezeichnen, gespeichert. Hinter jeder Kennzahl, z.B Ortskennzahl, ist in zugeordneten Bündel-Adressen-Speicherfeldern c1 bis cn gespeichert, über welche Bündel die durch die jeweils entsprechende Ortskennzahl gekennzeichnete Endvermittlungsstelle erreichbar ist. Hierbei geht es also um diejenigen Bündel, die von der Zentralvermittlungsstelle Z1 ausgehen, also an dieselbe angeschlossen sind.

Zum Erreichen eines jeweils angewählten Zielortes, also einer jeweils angewählten Endvermittlungsstelle, bestehen - wie bereits erläutert - jeweils eine Mehrzahl von Verkehrsmöglichkeiten. Die dabei gewählte und demgemäß herzustellende Verbindung kann über Leitungen bzw. Kanäle mehrerer verschiedener Bündel weitergeschaltet werden. In dem Speicher Y für Verkehrsmöglichkeiten-Daten ist nun pro Kennzahl angegeben, über welche verschiedenen Bündel die gewünschte Verbindung weitergeschaltet werden kann.

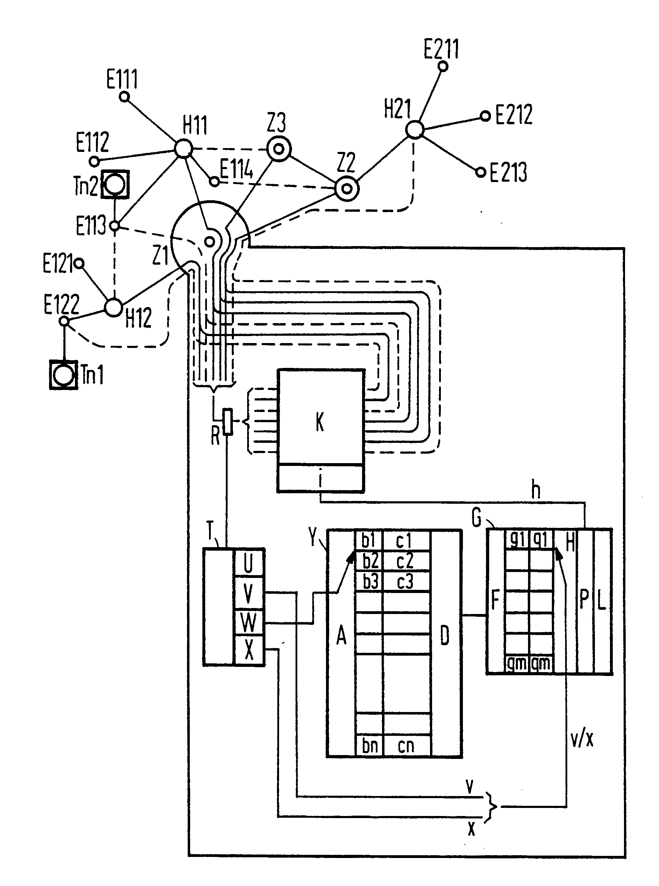

Der zuvor beschriebene Speicher Y für Verkehrsmöglichkeiten-Daten gehört also zu den Einrichtungen zur Leitweglenkung gemäß dem hier beschriebenen Ausführungsbeispiel der Erfindung. Ein solcher Speicher, der auch als "Leitwegzuordner" bezeichnet wird, kann so ausgebildet sein, wie es in der Zeitschrift "Informationen Fernsprech-Vermittlungstechnik" der Siemens AG, Jahrgang 1968, Heft 1, Seite 13ff dargestellt und erläutert ist (vgl. auch die DE-PS 19 17 442 = VPA 69/2315, insbesondere Fig. 2). Durch die Leitweglenkung wird in der Vermittlungsstelle unter den jeweils bei einer für eine Verbindungsherstellung gegebenen Wahlinformation zur Verfügung stehenden verschiedenen und hinsichtlich des Verbindungsweg-Verlaufes verschieden günstigen Wegemöglichkeiten, die aufgrund der Maschennetzform bestehen, jeweils eine günstigste Wegemöglichkeit ausgewählt. Hierzu dient außer dem Speicher Y für Verkehrsmöglichkeiten-Daten eine Bündelauswahl-Einrichtung G.

Ist in Zusammenhang mit einer gewünschten Verbindungsherstellung die jeweilige Zielortskennzahl gewählt, und hat die Speicheransteuereinrichtung A im Speicher Y für Verkehrsmöglichkeiten-Daten die betreffende Zeile angesteuert, so werden die in dem betreffenden Bündel-Adressen-Speicherfeld, zum Beispiel c3, gespeicherten Verkehrsmöglichkeiten-Daten, welche Adressen von für die betreffende Verkehrsbeziehung (Ursprungs-Endvermittlungsstelle/Ziel-Endvermittlungsstelle) überhaupt brauchbaren Bündeln darstellen, von der Ausgabeeinrichtung D an die Bündelauswahleinrichtung G übertragen. Hier werden sie von einer Schreibeinrichtung F in Bündel-Adressen-Auswahlfelder g1 bis gm eingeschrieben. Hierbei dient jeweils ein Bündel-Adressen-Auswahlfeld, zum Beispiel g1, zur Aufnahme einer Bündeladresse. Sind sämtliche für jeweils eine Verkehrsbeziehung überhaupt brauchbaren Bündel in die Bündeladressen-Auswahlfelder eingeschrieben, so kann eine Auswahl mit Hilfe einer Ansteuereinrichtung H erfolgen. Zusätzlich ist ein Bündel-Besetztspeicher L vorgesehen und ein Vergleicher P. In dem Bündel-Besetztspeicher wird ein Bündel jeweils als besetzt gekennzeichnet, wenn sämtliche seiner Leitungen bzw. Kanäle belegt sind.

Mit Hilfe der Ansteuereinrichtung H werden nun nacheinander die Bündeladressen-Auswahlfelder angesteuert, in welchen einzeln Bündeladressen gespeichert sind, die also jeweils einem Bündel zugeordnet sind und dasselbe bezeichnen. Beim Lesen der Bündel-Adressen mit Hilfe der Ansteuereinrichtung H werden zugleich im Bündel-Besetzt-Speicher L den Bündeln zugeordnete, hier nicht im einzelnen gezeigte Speicherglieder angesteuert, in denen pro Bündel vermerkt ist, ob in dem jeweiligen Bündel wenigstens noch eine Leitung bzw. jeweils noch ein Kanal frei ist. Mit Hilfe der Bündel-Auswahl-Einrichtung wird auf diese Weise pro Verbindungsherstellung jeweils ein Bündel ausgewählt, in dem wenigstens eine Leitung bzw. wenigstens ein Kanal frei ist.

Wie bereits ausgeführt wurde, ergibt sich aus der zu einer Verbindungsherstellung gehörenden Ursprungsinformation und aus der für die Verbindungsherstellung bestimmenden Wahlinformation, welche Kommunikationsmöglichkeiten übereinstimmend für die einer gewöhnlichen Fernsprechverbindung zufrieden ist, wenn nur eine solche hergestellt werden kann. Es kann aber auch der Fall vorkommen, daß ein Teilnehmer vonvornherein lediglich eine gewöhnliche Fernsprechverbindung herzustellen wünscht, daß aber Leitungen bzw. Kanäle frei sind, die auch für eine Bildfernsprechverbindung geeignet wären. In einem solchen Falle besteht die Möglichkeit, eine solche Fernsprechverbindung auch über eine Leitung bzw. einen Kanal herzustellen, der auch für eine Bildfernsprechverbindung geeignet wäre. In diesem Fall wäre die Auswahl eines für Bildfernsprechverbindungen geeigneten Kanals bzw. einer entsprechenden Leitung nur wegen des vermittlungstechnischen Angebotes nutzbar; die durch den betreffenden Kanal bzw. durch die betreffende Leitung gegebene Video-Möglichkeit würde dabei aber ungenutzt bleiben. Darüber hinaus kann es Möglichkeiten geben, bei denen die Auswahl unter mehreren Bündeln aus Wirtschaftlichkeitsgründen von vornherein beschränkt sein soll und demgemäß beschränkt wird auf einen unerweitert erforderlichen Umfang der technischen Übertragungsmöglichkeiten für die betreffende herzustellende Verbindung. Sind z.B. in einer bestimmten Verkehrsbeziehung zwischen zwei Vermittlungsstellen sehr viele Leitungen bzw. Kanäle vorhanden, die sich lediglich für Fernsprechverbindungen eignen, dagegen sehr wenige Leitungen bzw.Kanäle, die sich auch für Bildfernsprechverbindungen eignen, so kann vorgesehen werden, daß Kanäle der letzteren Art nur dann verwendet werden, wenn tatsächlich eine Bildfernsprechverbindung in Frage kommt oder unbedingt gewünscht wird.

Für den Fall, daß ein Teilnehmer mit Bildfernsprech-Möglichkeit eine Verbindung zu einem an eine konventionelle Vermittlungsstelle angeschlossenen Teilnehmer wählt, wird mit zusätzlich von ihm gewählten Kommunikationsartdaten für Bildfernsprechen ein Zustandekommen - oder Nicht-Zustandekommen - der gewählten Verbindung auch in Abhängigkeit davon gesteuert, ob er die betreffende Kommunikationsart unbedingt fordert, oder nur vorzugsweise anzuwenden wünscht.

Wie bereits erläutert wurde, ergibt sich die Zusatzinformation aus Kommunikationsart-Daten, die vom jeweils rufenden Teilnehmer abgegeben werden und/oder aus Kommunikationsmöglichkeiten, die sich aus der Ursprungsinformation und der Wahlinformation ergeben und demgemäß ableiten lassen. Diese Kommunikationsmöglichkeiten können auch dadurch (in einschränkendem Sinne) bestimmt sein, daß die Verbindungswege von einer Ursprungsvermittlungsstelle bzw. die Verbindungswege zu einer Zielvermittlungsstelle keine höheren Kommunikationsmöglichkeiten zulassen. Solche, die jeweiligen Verbindungswege betreffenden Kriterien ergeben sich ebenfalls aus der jeweiligen Ursprungsinformation bzw. der jeweiligen Wahlinformation.

Erfindungsgemäß ist nun vorgesehen, daß bei einer der Verbindungsherstellung dienenden Auswahl eines freien Kanals bzw. einer freien Leitung aus mehreren Bündeln, die zum Erreichen des betreffenden angewählten Zielortes hierbei überhaupt in Frage kommen, ein Bündel mit wenigstens einem freien Kanal bzw. einer freien Leitung nicht nur aufgrund der aus der Wahlinformation sich ergebenden Zielortsinformation, sondern auch aufgrund der Zusatzinformation vor-ausgewählt wird. Hierzu wird die bereits beschriebene Zusatzinformation, die sich aus dem von dem Vergleicher V ermittelten Ergebnis (übereinstimmende Kommunikationsmöglichkeiten bezüglich des rufenden Teilnehmers und des angewählten Teilnehmers) und aus den vom jeweils rufenden Teilnehmer abgegebenen Kommunikationsart-Daten zusammen setzen, über den Informationsweg v und/oder den Informationsweg x zur Ansteuereinrichtung H übertragen. Diese Zusatzinformation gibt der Ansteuereinrichtung H an, in welcher Weise eine Auswahl unter den für die Ansteuerung eines bestimmten Zielortes überhaupt in Frage kommenden Bündeln getroffen werden muß. Die Zusatzinformation gibt bezüglich der zum Erreichen eines gewünschten Zielortes (Endvermittlungsstelle) überhaupt in Frage kommenden Bündel an, ob und in welchem Ausmaß ein jedes dieser Bündel von einer Auswahl von vornherein ausgeschlossen ist. Ferner bestimmt die Zusatzinformation der Ansteuereinrichtung die Auswahlreihenfolge, in der die in Frage kommenden Bündel einer Auswahl in der beschriebenen Weise unterzogen werden müssen, das heißt immer unter der Voraussetzung, daß in dem betreffenden Bündel wenigstens noch ein Kanal bzw. wenigstens eine Leitung frei ist.

Wie bereits ausgeführt wurde, unterscheiden sich die Bündel hinsichtlich des Umfanges der durch die in ihnen enthaltenen Kanäle bzw. Leitungen gegebenen technischen Übertragungsmöglichkeiten, das heißt unerweitert oder - mehr oder weniger - erweitert, in mehrere Klassen. Diese Übertragungsmöglichkeiten betreffen die Bandbreite und/oder den Umfang der Signalisierungsmöglichkeiten. In dieser Weise sind also die Bündel in zwei oder mehr Klassen unterteilt. Die verschiedenen Klassen bieten jeweils die Voraussetzung für diese oder jene Kommunikationsarten.

Erfindungsgemäß ist die Leitweglenkung nicht nur nach den verschiedenen und unterschiedlich günstigen Wegemöglichkeiten gestaltet, sondern auch nach den Kommunikationsmöglichkeiten, die die verschiedenen Wegemöglichkeiten (das heißt die verschiedenen zum Erreichen eines jeweils angewählten Zielortes benutzbaren Bündel) zugleich beinhalten. Dabei gibt die Zusatzinformation die Kommunikationsarten an; sie gibt bezüglich dieser Kommunikationsarten an, ob sie unbedingt gefordert werden, oder nur vorzugsweise oder überhaupt nicht erforderlich sind.

Zusammen mit den Bündel-Adressen derjenigen Bündel, die für eine Verbindungsherstellung insgesamt überhaupt in Frage kommen, werden bei einer Verbindungsherstellung in Zuordnung zu diesen Bündel-Adressen in der Bündel-Auswahleinrichtung Klassenmerkmale gespeichert, die für jedes der betreffenden Bündel die bei demselben bestehenden Kommunikationsmöglichkeiten angeben. Wie ausgeführt wurde, geben diese Klassen jeweils den Umfang der durch die Kanäle eines Bündels gegebenen technischen Übertragungsmöglichkeiten an. Diese Klassen können für die Bündel zum Beispiel angeben, ob sie für Bildfernsprechverbindungen geeignet sind, oder nur für konventionelle Fernsprechverbindungen oder nur für konventionelle Fernschreibverbindungen. Darüber hinaus kann es auch Klassen geben, die der Datenübertragung, dem Schnellfax und dergleichen zugeordnet sind.

In Zuordnung zu den Bündel-Adressen wird pro Bündel-Adresse jeweils ein Klassenmerkmal im Speicher g1 bis gm der Bündel-Auswahleinrichtung gespeichert. Zur Speicherung dieser Klassenmerkmale mögen die Speicherzellen q1 bis qm vorgesehen sein.

Es sei nun der Fall betrachtet, daß ein Teilnehmer eine Bildfernsprechverbindung herzustellen wünscht, und zwar nichts anderes als eine Bildfernsprechverbindung. Unter dieser Voraussetzung wählt der betreffende Teilnehmer entsprechende Kommunikationsart-Daten (diese können auch vom Endgerät automatisch geliefert werden), wodurch er signalisiert, daß er eine Bildfernsprechverbindung herzustellen wünscht, und daß eine konventionelle Fernsprechverbindung in diesem Falle nicht ausreicht.In der betreffenden Zusatzinformation ist enthalten, daß die technischen Übertragungsmöglichkeiten der herzustellenden Verbindung unbedingt eine Bildfernsprechverbindung ermöglichen müssen. Diese Zusatzinformation wird über den Informationsweg v/x zur Ansteuereinrichtung H übertragen. Wie ausgeführt, ist in Zuordnung zu den in den Bündel-Adressen-Auswahlfeldern g1 bis gm gespeicherten Bündel-Adressen gespeichert (in den Klassenmerkmal-Speichergliedern q1 bis qm) welche Kommunikationsmöglichkeiten durch die betreffenden Bündel gegeben sind. Die Ansteuereinrichtung H beschränkt nun aufgrund der ihr über den Informationsweg v/x übertragenen Zusatzinformation ihre Auswahl auf diejenigen Bündel, die die Kommunikationsmöglichkeit für Bildfernsprechverbindungen bieten.

Unter einer weiteren Beschreibungs-Voraussetzung, daß ein Teilnehmer von einer Teilnehmerstelle, die Bildfernsprechverbindungen ermöglicht, einen anderen Teilnehmer anwählt, dessen Teilnehmerstelle ebenfalls Bildfernsprechverbindungen ermöglicht, möge der rufende Teilnehmer lediglich die Rufnummer des anderen Teilnehmers wählen. In diesem Falle sollen die technischen Übertragungsmöglichkeiten der gewählten Verbindung lediglich vorzugsweise für eine Bildfernsprechverbindung, anderenfalls aber für eine konventionelle Fernsprechverbindung geeignet sein. In diesem Falle ergibt sich also alleine aus der Ursprungsinformation sowie der Wahlinformation die Zusatzinformation. Sie gibt an, daß eine Fernsprechverbindung gewünscht wird, vorzugsweise eine Bildfernsprechverbindung. Unter dieser Voraussetzung wird die Ansteuereinrichtung H dahingehend beeinflußt, daß sie zunächst die Bündel absucht, die die Kommunikationsmöglichkeit Bildfernsprechen bieten. Danach werden die anderen Bündel, die also die Kommunikationsmöglichkeit Bildfernsprechen nicht bieten, abgesucht.

Handelt es sich um zwei miteinander zu verbindende Teilnehmerstellen, die die Kommunikationsmöglichkeit Bildfernsprechen nicht beinhalten, so sucht die Ansteuereinrichtung H aufgrund der entsprechenden Zusatzinformation, die sich ebenfalls nur aus der Ursprungsinformation und aus der Wahlinformation ergibt, zunächst die Bündel ab, die nur die Kommunikationsmöglichkeit Fernsprechen bieten. Weitere Bündel, die die Kommunikationsmöglichkeit Bildfernsprechen bieten, werden entweder danach oder überhaupt nicht oder nur in beschränktem Umfange abgesucht. Dies richtet sich nach den Gegebenheiten des Netzes oder den Wünschen der betreibenden Fernmeldeverwaltung.

Wie ausgeführt wurde, werden aufgrund der bei einer Verbindungsherstellung in einer Vermittlungsstelle vorliegenden Zielortsinformation (Zielortskennzahl) die überhaupt dafür in Frage kommenden Bündel in eine Liste eingetragen. Diese Liste besteht aus den Bündel-Adressen-Auswahlfeldern. Im Zusammenhang hiermit kann nun auch vorgesehen werden, daß aufgrund der Zusatzinformation für das Absuchen der in den Bündel-Adressen-Auswahlfeldern eingetragenen Bündel-Adressen aufgrund der Zusatzinformation die Richtung der Absuchreihenfolge und/oder deren Startpunkt und/oder deren Endpunkt bestimmt ist. Demgemäß kann also das Absuchen der Bündel-Adressen-Auswahlfelder in Abhängigkeit von der jeweiligen Zusatzinformation in der einen oder in der anderen Richtung erfolgen und an durch die Zusatzinformation bestimmten Stellen gestartet bzw. gestoppt werden.

Durch die Zusatzinformation, die über die Informationswege v/x vom Speicher T für Verbindungsinformationen zur Bündel-Auswahleinrichtung G übertragen werden, wird also die Arbeitsweise der letzteren pro herzustellende Verbindung speziell festgelegt. Nachdem zunächst sämtliche für die Verkehrsbeziehung zwischen der Endvermittlungsstelle, an die der rufende Teilnehmer angeschlossen ist, und der Endvermittlungsstelle, an die der angewählte Teilnehmer angeschlossen ist, überhaupt möglichen Bündel mit ihren Bündel-Adressen einzeln in die verschiedenen Bündel-Adressen-Auswahlfelder g1 bis gm eingetragen worden sind (mit Hilfe der Ausgabeeinrichtung D und der Einschreibeinrichtung F) wird dann durch die Zusatzinformation gegebenenfalls eine Einschränkung bewerkstelligt, dahingehend daß ein Teil der Bündel von vornherein von der Auswahl ausgeschlossen wird, und daß die Auswahlreihenfolge gemäß der jeweiligen Zusatzinformation bestimmt wird.

Die Ausschließung von der Auswahl kann dadurch bewerkstelligt werden, daß bei der Auswahl ein pro zunächst zur Auswahl stehendes Bündel in den Klassenmerkmal-Speichergliedern q1 bis qm gespeichertes Klassenmerkmal mit abgefragt wird und durch einen Vergleich mit einem in der Zusatzinformation enthaltenen geforderten Klassenmerkmal verglichen wird. Trägt ein zunächst zur Auswahl stehendes Bündel nicht das Klassenmerkmal für diejenigen technischen Übertragungsmöglichkeiten, die für die betreffende Verbindung gefordert werden, so ist damit das betreffende Bündel von der Auswahl von vornherein ausgeschlossen. Mit Hilfe des in den Klassenmerkmal-Speichergliedern q1 bis qm zugeordnet gespeicherten Klassenmerkmales pro Bündel ist es auch möglich, die Auswahlreihenfolge zu bestimmen. Zum Beispiel kann in einem ersten Teil-Auswahlvorgang eine Suche nach Bündeln mit einem bestimmten vorzugsweise geforderten Klassenmerkmal durchgeführt werden, anschließend kann in einem zweiten Teil-Auswahlvorgang die Suche nach einem Bündel mit einem anderen Klassenmerkmal durchgeführt werden. Es ist möglich, bei dem ersten Teil-Auswahlvorgang die Auswahl zu beschränken auf Bündel mit einem Klassenmerkmal, das erweiterten technischen Übertragungsmöglichkeiten entspricht, und das in dem zweiten Teil-Auswahlvorgang die Suche fortgesetzt wird unter denjenigen Bündeln mit einem Klassenmerkmal, das weniger erweiterte oder unerweiterte Übertragungsmöglichkeiten aufweisen. Ebenso gut ist es aber möglich, die beiden Teil-Auswahlvorgänge in umgekehrter Reihenfolge, das heißt mit umgekehrter Priorisierung der betreffenden Klassen durchzuführen.

Mit Hilfe der in den Klassenmerkmal-Speichergliedern q1 bis qm pro gespeicherte Bündeladresse zugeordnet gespeicherten Klassenmerkmale kann also durch einen Vergleich des mit der jeweiligen Zusatzinformation übertragenen, für die betreffende Verbindung geforderten Zusatzmerkmales mit den pro Bündel gespeicherten Zusatzmerkmalen sowohl die Auswahl in der erfindungsgemäßen Weise eingeschränkt werden als auch die Auswahlreihenfolge unter verschiedenen Leitungsbündeln bestimmt werden.

Die Einschränkung der Auswahl und die jeweils geforderte Auswahlreihenfolge unter verschiedenen Bündeln kann jedoch auch dadurch bewerkstelligt werden, daß aufgrund der Zusatzinformation die Richtung der Absuchreihenfolge sowie deren Startpunkt und/oder deren Endpunkt bestimmt ist. In diesem Falle kann die Ansteuereinrichtung H also dahingehend gesteuert werden, daß die Richtung ihrer jeweiligen Absuchreihenfolge gewechselt wird, und daß ihr Absuchvorgang nicht beim obersten Bündeladressen-Auswahlfeld g1, sondern weiter unten beginnt. Entsprechendes gilt für die umgekehrte Absuchreihenfolge. Ebenso ist es auch möglich, daß der Auswahlvorgang der Ansteuereinrichtung H bereits gestoppt wird, wenn in der Reihe der in den Bündeladressen-Auswahlfeldern g1 bis gm gespeicherten Bündeladressen noch nicht alle Bündeladressen abgesucht sind. Entsprechendes gilt ebenfalls in diesem Falle für die umgekehrte Absuchreihenfolge. Maßgebend für diese Absuch-Varianten ist immer die Zusatzinformation. Die Entscheidung, wie die Zusatzinformation beeinflußt wird durch die die Vermittlungsstelle betreibende Fernmeldeverwaltung entsprechend festgelegt.

Die in der Zeichnung dargestellten Bündeladressen-Auswahlfelder g1 bis gm stellen eine Liste dar, in die zielortsbedingt Bündeladressen in der beschriebenen Weise eingeschrieben werden, und zwar von Bündeln, die zum Erreichen des jeweils angewählten Zielortes überhaupt in Frage kommen. Es ist nun auch möglich, in einer Bündelauswahleinrichtung mehrere solcher Listen vorzusehen. In diesem Zusamenhang ist vorgesehen, daß aufgrund der bei einer Verbindungsherstellung in der Vermittlungsstelle vorliegenden Zielortsinformation die überhaupt in Frage kommenden Kanalbündel in mehrere Listen eingetragen werden. Diese mehreren Listen sind in diesem Falle einzeln den verschiedenen möglichen Zusatzinformationen zugeordnet. Entsprechend der bei der betreffenden Verbindungsherstellung sich jeweils ergebenden Zusatzinformation wird - wie bereits mehrfach ausgeführt wurde -die Auswahl unter den insgesamt überhaupt in Frage kommenden Bündeln eingeschränkt sowie die Auswahlreihenfolge unter den Bündeln verschiedener Klassen unterschiedlich festgelegt.

Es ist nun in diesem Zusammenhang vorgesehen, beim Einschreiben der in Frage kommenden Bündeladressen in die verschiedenen Listen jeweils die der einzelnen Zusatzinformation entsprechende Beschränkung in der Auswahl sowie die bei der jeweiligen Zusatzinformation erforderliche Auswahlreihenfolge zu berücksichtigen. Auf diese Weise werden dann also pro Verbindungsherstellung in der Regel mehrere Listen beschrieben, von denen jede einer der verschiedenen möglichen Zusatzinformationen entspricht. Trifft dann im Zuge der Verbindungsherstellung die tatsächliche Zustzinformation über die Informationswege v/x bei der betreffenden Auswahleinrichtung ein, so nimmt diese die erforderlich werdende Auswahl anhand derjenigen Liste vor, die der bei der betreffenden Verbindungsherstellung jeweils maßgebenden Zusatzinformation entspricht. In diesem Fall ist also vorgesehen, daß aufgrund der bei einer Verbindungsherstellung in einer Vermittlungsstelle vorliegenden Zielortsinformation die überhaupt in Frage kommenden Kanalbündel in mehrere Listen eingetragen werden. Innerhalb derselben werden dabei die Kanalbündel nach Maßgabe der gegebenen verschiedenen Klassen einerseits hinsichtlich ihrer Eintragungsreihenfolge individuell geordnet und andererseits gegebenenfalls teilweise wieder gelöscht bzw. von vornherein weggelassen. Durch die Zusatzinformation wird dann bestimmt, in welcher der mehreren Listen die betreffende Auswahleinrichtung die Auswahl eines Bündels durchzuführen hat.

Bei der bisherigen Beschreibung des Ausführungsbeispieles wurde lediglich auf die Kommunikationsarten Fernschreiben, konventionelles Fernsprechen und Bildfernsprechen Bezug genommen. Die Erfindung ist jedoch ebenso gut auch anwendbar, wenn jegliche weiteren Kommunikationsmöglichkeiten (insbesondere diejenigen, die auf dem Titelblatt des Sonderheftes der Zeitschrift "telcom report" 8. Jahrgang/1985 angegeben sind) vorgesehen sind. Dabei können sich die verschiedenen Kommunikationsmöglichkeiten sowohl darin unterscheiden, daß für die jeweilige Nachrichtenübertragung Kanäle unterschiedlicher Bandbreiten erforderlich sind. Ebenso können sich aber diese verschiedenen Kommunikationsmöglichkeiten auch darin unterscheiden, daß - wie weiter oben bereits erläutert - sich die verschiedenen verbindungsindividuell belegbaren Kanäle bzw. Bündel auch hinsichtlich des Umfanges des Spektrums der verschiedenen möglichen Signalisierungsinformationen voneinander unterscheiden.

Die Erfindung erstreckt sich auch auf den Fall, daß die genannten Vermittlungsstellen gänzlich oder teilweise Nebenstellenvermittlungsanlagen sind. So kann z. B. eine Nebenstellenvermittlungsanlage über ein Bündel konventioneller Leitungen an eine konventionelle Vermittlungsstelle und zusätzlich über ein Bündel von Breitbandkanälen an eine Vermittlungsstelle in ISDN-Technik angeschlossen sein. Ebenso kann auch eine Nebenstellenvermittlungsanlage über zwei Bündel dieser Art an ein und dieselbe Vermittlungsstelle angeschlossen sein, die sowohl konventionelle Verbindungen als auch Breitbandverbindungen herzustellen in der Lage ist. In diesen Fällen erstreckt sich die beschriebene Leitweglenkung auf sämtliche Verbindungswege also auch auf die die zu der betreffenden Nebenstellenvermittlungsanlage führenden Leitungs- bzw. Kanalbündel (Amtsleitungen bzw. -kanäle).

Ferner ist noch der Fall zu erwähnen, daß eine Fernsprechteilnehmerstelle konventioneller Fernsprechtechnik an eine Vermittlungsstelle einer Vermittlungsanlage mit einer Mehrzahl von in ISDN-Technik oder dergleichen aufgebauten Vermittlungsstellen, die untereinander durch Kanalbündel für erweiterte Übertragungsmöglichkeiten sowie über Bündel konventioneller Fernsprechvermittlungstechnik verbunden sind, angeschlossen ist. Es sei angenommen, daß der Teilnehmer an dieser Fernsprechteilnehmerstelle eine andere Teilnehmerstelle anwählt, an der die Rufnummer des rufenden Teilnehmers angezeigt werden kann. Auf diese technischen Möglichkeiten und eine Inanspruchnahme der ihr entsprechenden Kommunikationsart hat der rufende Teilnehmer in diesem Fall keinen Einfluß. Diese Kommunikationsart ist eine aus der besonderen Art der hierbei angewählten Teilnehmerstelle sich ergebende Kommunikationsmöglichkeit. Bei der Verbindungsherstellung in einer Zwischenvermittlungsstelle (dies sei eine Vermittlungsstelle zwischen derjenigen Vermittlungsstelle, an die die Fernsprechteilnehmerstelle des hierbei rufenden Teilnehmers angeschlossen ist und derjenigen Vermittlungsstelle, an die die hierbei angewählte Teilnehmerstelle angeschlossen ist), in der Wege sowohl für konventionelle Kommunikationsmöglichkeiten als auch für erweiterte Kommunikationsmöglichkeiten verfügbar sind, ergibt sich die betreffende Zusatzinformation aus der durch die hierbei angewählte Teilnehmerstelle gegebenen Kommunikationsmöglichkeit, die bei einem Angerufenwerden eine Anzeige der Rufnummer der jeweils rufenden Teilnehmerstelle einschließt. Hieraus ergibt sich für die Auswahl des geeigneten Verbindungsweges, daß ein solcher ausgewählt wird, der die angesprochene Kommunikationsart mit umfaßt. Dadurch wird beim angerufenen Teilnehmer die Rufnummer des rufenden Teilnehmers zur Anzeige gebracht, ohne das ersterer hierauf selber irgendwie Einfluß zu nehmen vermag. Die zuvor genannte Auswahl selber erfolgt dann in der weiter oben bereits ausführlich beschriebenen Weise nach den durch die erfindungsgemäßen Maßnahmen gegebenen Regeln.

## Patentansprüche

1. Schaltungsanordnung für Fernmeldevermittlungsanlagen, insbesondere Fernsprechvermittlungsanlagen, mit einem wenigstens teilweise maschenartigen Netz von Bündeln von verbindungsindividuell belegbaren Kanälen, die in einzelne Netzknoten in diesem Netz bildenden Vermittlungsstellen verbindungsindividuell vermittlungstechnisch zusammenschaltbar sind, und mit Kanalbündeln wenigstens zweier hinsichtlich des Umfangs der durch die Kanäle gegebenen technischen Übertragungsmöglichkeiten, d.h. unerweitert oder - mehr oder weniger - erweitert, sich unterscheidenden Klassen, wobei Kanalbündel auch zweier - oder auch mehrerer - Klassen parallel zwischen je zwei Netzknoten angeordnet sein können, und mit in den Vermittlungsstellen vorgesehenen Einrichtungen zur Leitweglenkung, durch die in einer Vermittlungsstelle unter den jeweils bei einer für eine Verbindungsherstellung gegebenen Wahlinformation zur Verfügung stehenden verschiedenen und hinsichtlich des Verbindungsweg-Verlaufes verschieden günstigen Wegemöglichkeiten, die aufgrund der Maschennetzform bestehen, jeweils eine günstigste Wegemöglichkeit ausgewählt wird, und in denen mit Hilfe einer den jeweils erforderlichen Umfang der technischen Übertragungsmöglichkeiten, die durch die jeweilige Ursprungs- und/oder Zielvermittlungsstelle und/oder durch Kanalbündel von bzw. zu diesen gegeben sind, für eine herzustellende Verbindung angebenden Zusatzinformation eine ein freier Kanal aus einem Kanalbündel, das zum Erreichen des betreffenden angewählten Zielortes in Frage kommt, nicht nur aufgrund der aus der Wahlinformation sich ergebenden Zielinformation sondern auch aufgrund der Zusatzinformation ausgewählt wird, wobei sich aus der Zielortsinformation die jeweils überhaupt infragekommenden Kanalbündel ergeben, und wobei die Zusatzinformation bezüglich dieser Kanalbündel, die durch verschiedene Klassenmerkmale bezeichnet sind, angibt, ob und in welchem Ausmaß sie von einer Auswahl ausgeschlossen sind,

**dadurch gekennzeichnet,**
daß die Zusatzinformation nach Maßgabe der technischen Übertragungsmöglichkeiten, die durch die jeweilige Ursprungs- und/oder Zielvermittlungsstelle und/oder durch Kanalbündel von bzw. zu diesen gegeben sind, aus einer entsprechenden Ursprungsinformation und/oder aus einer durch die Wahlinformation gegebenen Zielortsinformation abgeleitet wird, und daß bei einer der Verbindungsherstellung dienenden Auswahl eines freien Kanals aus einer Mehrzahl von Kanalbündeln, die zum Erreichen des betreffenden angewählten Zielortes hierbei überhaupt in Frage kommen, eines dieser Kanalbündel nach einer für sie aufgrund der jeweils gegebenen Zusatzinformation geltenden Auswahlreihenfolge in der Weise vorausgewählt wird, daß aufgrund der bei einer Verbindungsherstellung in einer Vermittlungsstelle vorliegenden Zielortsinformation die überhaupt infrage kommenden Kanalbündel in eine Liste eingetragen werden und daß aufgrund der Zusatzinformation die Richtung der Absuchreihenfolge sowie deren Startpunkt und/oder deren Endpunkt bestimmt ist.

2. Schaltungsanordnung nach Anspruch 1,
**dadurch gekennzeichnet,**
daß aufgrund der bei einer Verbindungsherstellung in einer Vermittlungsstelle vorliegenden Zielortsinformation die überhaupt in Frage kommenden Kanalbündel in mehrere Listen eingetragen werden und dabei innerhalb derselben nach Maßgabe der bestehenden verschiedenen Klassen einerseits hinsichtlich ihrer Eintragungsreihenfolge individuell geordnet und andererseits gegebenenfalls teilweise wieder gelöscht bzw. von vornherein weggelassen werden, und daß durch die Zusatzinformation bestimmt wird, in welcher der mehreren Listen die Auswahl eines Bündels durchgeführt wird.

3. Schaltungsanordnung nach Anspruch 1,
**dadurch gekennzeichnet,**
daß der Wahlinformation eine einen unbedingt oder einen vorzugsweise erforderlichen oder einen nur je nach vermittlungstechnischem Angebot nutzbaren oder einen überhaupt nur unerweitert erforderlichen Umfang der technischen Übertragungsmöglichkeiten für eine herzustellende Verbindung angebende Zusatzinformation beigefügt ist.

**Claims**

1. Circuit arrangement for telecommunication exchanges, especially telephone exchanges, with an at least partially mesh-like network of groups of connection-individually seizable channels which can be connection-individually connected together by switching means in positions forming individual network nodes in this network, and with channel groups of at least two classes which differ with respect to the extent of the technical transmission capabilities given by the channels, that is to say unextended or - more or less - extended, in which arrangement channel groups also of two - or also more - classes can be arranged in parallel between two network nodes each, and with routing facilities, provided in the exchanges, by means of which in each case one most advantageous path possibility is selected in an exchange from the different path possibilities available in each case with selection information given for establishing a connection and differently advantageous with respect to the variation of the connecting path, and in which a free channel is selected from a channel group which is being considered for reaching the relevant dialled destination location, not only on the basis of the destination information resulting from the selection information but also on the basis of the additional information, with the aid of additional information which specifies the extent of technical transmission capabilities required in each case which are given by the respective origin and/or destination position and/or by channel groups from and, respectively, to these, for a connection to be established, the channel groups considered at all in each case being obtained from the destination location information and the additional information specifying with respect to these channel groups, which are designated by different class attributes, whether and to what extent they are excluded from a selection, characterised in that the additional information is derived from corresponding origin information and/or from destination location information given by the selection information, as determined by the technical transmission capabilities which are given by the respective origin and/or destination exchange and/or by channel groups from or, respectively, to these, and in that in the case of a selection, which is used for establishing the connection, of a free channel from a plurality of channel groups which are considered at all in this case for reaching the relevant dialled destination location, one of these channel groups is preselected in accordance with a selection order applying to it on the basis of the additional information given in each case, in such a manner that on the basis of the destination location information present in an exchange during the establishment of a connection the channel groups considered at all are entered in a list and that the direction of the search order and its starting point and/or its endpoint is determined on the basis of the additional information.

2. Circuit arrangement according to Claim 1, characterised in that the channel groups considered at all are entered in several lists on the basis of the destination location information present in an exchange during the establishment of a connection and during this process are, on the one hand, individually ordered with respect to the order in which they are entered as determined by the existing different classes, and, on the other hand, are partially deleted again or omitted right from the start, as necessary, and in that the additional information determines in which one of the several lists the selection of a group is carried out.

3. Circuit arrangement according to Claim 1, characterised in that additional information specifying an extent, which is absolutely required or which is preferably required or which can only he utilised depending on the available switching or which is only required unextended in any case is added to the selection information.

**Revendications**

1. Montage pour des installations de commutation de télécommunications, notamment des installations de commutation téléphonique, comportant un réseau, au moins partielle-ment maillé, de groupes de canaux pouvant être occupés individuellement par des liaisons et qui peuvent être interconnectés individuellement pour chaque liaison, du point de vue de la technique de commutation, dans des centraux formant des noeuds individuels dans ce réseau, et comportant des groupes de canaux d'au moins deux classes qui diffèrent du point de vue de l'ampleur des possibilités techniques de transmission fournies par les canaux, c'est-à-dire sans extension ou avec une extension -plus ou moins importante-, des groupes de canaux appartenant également à deux -ou même plusieurs- classes et pouvant être disposés en parallèle entre deux noeuds respectifs du réseau, et des dispositifs d'acheminement des voies de transfert, prévues dans les centraux et à l'aide desquels, dans un central, la possibilité la plus appropriée d'acheminement est sélectionnée parmi les différentes possibilités appropriées d'acheminement, qui sont disponibles respectivement dans le cas d'une information de sélection déterminée pour l'établissement d'une liaison, et sont différentes du point de vue de la configuration de la voie de liaison, et dans lesquels, à l'aide d'une information supplémentaire indiquant pour une liaison devant être établie le volume respectivement requis des possibilités techniques de transmission, qui sont déterminées par le central d'origine et/ou le central respectif de destination et/ou par des groupes de canaux aboutissant à ces centraux ou en partant, un canal libre est sélectionné parmi un groupe de canaux, qui est pris en compte pour atteindre un emplacement de destination considéré sélectionné, non seulement sur la base de l'information de destination obtenue à partir de l'information de sélection, mais également sur la base de l'information supplémentaire, les groupes respectifs de canaux, qui entrent principalement en ligne de compte, étant obtenus à partir de l'information de l'emplacement de destination, et dans lequel l'information supplémentaire concernant ce groupe de canaux, qui sont désignés par des caractéristiques différentes de classe, indique si et à quel degré ils sont exclus d'une sélection, caractérisé par le fait que l'information supplémentaire est obtenue, en fonction des possibilités techniques de transmission qui sont déterminées par le central d'origine respectif et/ou le central de destination respectif et/ou par des groupes de canaux partant de ces centraux ou y aboutissant, à partir d'une information d'origine correspondante et/ou à partir d'une information d'emplacement de destination déterminée par l'information de sélection, et que, lors d'une sélection, utilisée pour l'établissement d'une liaison, d'un canal libre parmi une multiplicité de groupes de canaux, qui entrent principalement en ligne de compte pour l'obtention de l'emplacement de destination sélectionné considéré, l'un de ces groupes de canaux est présélectionné selon une séquence de sélection valable pour ces canaux sur la base de l'information supplémentaire respectivement donnée, de telle sorte que, sur la base de l'information de l'emplacement de destination, qui est présente lors de l'établissement d'une liaison dans un central, les groupes de canaux, qui entrent principalement en jeu, sont introduits dans une liste et que la direction de la séquence de recherche ainsi que son point de départ et/ou son point d'extrémité sont déterminés sur la base de l'information supplémentaire.

2. Montage suivant la revendication 1, caractérisé par le fait que, sur la base de l'information de l'emplacement de destination, qui est présente lors de l'établissement d'une liaison dans un central, les groupes de canaux, qui entrent principalement en jeu , sont introduits dans plusieurs listes et à l'intérieur de ces listes, ils sont, d'une part, rangés individuellement en fonction de leur séquence d'entrée, et, d'autre part, sont éventuellement à nouveau partiellement effacés ou éliminés par avance, en fonction des différentes classes existantes, et que l'information supplémentaire détermine dans laquelle des différentes listes la sélection d'un groupe est exécutée.

3. Montage suivant la revendication 1, caractérisé par le fait qu'à l'information de sélection est adjointe une information supplémentaire indiquant, pour une liaison devant être établie, un volume absolument nécessaire ou un volume de préférence nécessaire ou un volume utilisable uniquement en fonction de graphiques techniques de commutation ou nécessaire principalement seulement sans extension, des possibilités techniques de transmission.